# EUROPEAN PATENT APPLICATION

(11) **EP 2 314 739 A1**
(43) Date of publication of application: **27.04.2011**
(21) Application number: 09173852.6
(22) Date of filing: 22.10.2009
(51) Int. Cl.: D01D 5/00, A01K 11/00

(54) **Anti-migration casing for transponders**

(71) Applicant: Kim, Gyeong-Man, 20003 Donostia - San Sebastián (ES)
(72) Inventor: Kim, Gyeong-Man, 04220, Leipzig (DE)
(74) Representative: Bühler, Dirk

(57) **Abstract**

The present invention relates porous hollow objects consisting of at least one polymer and their use as anti-migration casings for transponders used for identification of animals. The porous hollow objects of the invention consist at least of polymeric nanofibers and have the three-dimensional surface structure of a nonwoven mat. The porosity of the objects of the invention allows for the adhesion and ingrowth of surrounding host cells following implantation into an animal and the porous hollow objects of the invention thus function as anti-migration casings. The present invention also relates to a novel apparatus for electrospinning for production of such porous hollow objects. The present invention also relates to a novel method for producing the porous hollow objects of the invention. Further the present invention relates to an implantable miniature transponder comprising at least the porous hollow object and a transponder unit, a method of assembling such a miniature transponder and the use of such a miniature transponder as an identification tag for animals.

## Description

### Field of the invention

The present invention relates porous hollow objects consisting of at least one polymer and their use as anti-migration casings for transponders used for identification of animals. The porous hollow objects of the invention consist at least of polymeric nanofibers and have the three-dimensional surface structure of a non-woven mat. The porosity of the objects of the invention allows for the adhesion and ingrowth of surrounding host cells following implantation into an animal and the porous hollow objects of the invention thus function as anti-migration casings. The present invention also relates to a novel apparatus for electrospinning for production of such porous hollow objects. The present invention also relates to a novel method for producing the porous hollow objects of the invention. Further the present invention relates to an implantable miniature transponder comprising at least the porous hollow object and a transponder unit, a method of assembling such a miniature transponder and the use of such a miniature transponder as an identification tag for animals.

### Background of the invention

Implantable microchips for electronic identification, or transponders, belong to the so called "radio frequency identity devices" (RFID; ISO 11874, ISO 11875). Following implantation, e.g. by injection under the skin of an animal, RFIDs allow for the reliable and quick identification of the animal. Current commercially available transponders contain a microchip, which features the unique and unforgeable identification number as well as an antenna together in a bioglass-capsule. The transponder does not emit any signals but can be read by an active reading-unit which communicates with the transponder by virtue of low frequency radiowaves. Typical commercially available transponders have roughly the dimensions of a rice grain, i.e. 12 x 2. mm, and 6 x 1 mm for mini-transponder. The identification of animals via transponders plays an important role for livestock farming and -production, as well as for veterinary treatment of animals and the control of pests and diseases. Since July 2009, RFID implantation in equids is mandatory from the age of six months on and starting in 2011, RFID-mediated identification will be obligatory for livestock and cattle in the entire EU. Further uses of transponders comprise the use for the identification and tracking of pets and laboratory animals.

Typical commercially available transponders are encapsulated in bioglass. However, the smooth surface of the glass often allows for movement or migration of the transponder in the animal, leading to unwanted problems. One problem is clearly locating the transponder for read-out, which in the case of cattle can be time- and resource-consuming. On the other hand migration of the transponder to locations of high mechanical strain, i.e. joints, can lead to destruction of the transponder and/or serious adverse reactions of the host, i.e. muscle and/or nerve impairment or damages. In order to prevent migration, coating-materials have been used on transponders, such as polytetraflouro ethylene. However, such coatings often lead to severe immune reactions, i.e. chronic inflammations and formation of abscesses. The British Small Animal Veterenary Association surveys the success of RFID-implantation. According to current numbers, almost 60% of unsuccessful implantations are according to migration of the transponder, and another 10% due to infections/swelling (http:///www.bsava.com).

Thus, there is a need for new strategies to encapsulate and/or encase transponders that prevent migration, and possibly, also do not cause inflammation in the host.

### Summary of the invention

A novel electrospinning method is presented that makes it possible to produce polymeric fibres and collect them on a rotating collector element, thus producing porous, hollow objects that can be used as casings for transponders. Using the appropriate polymer(s) a biocompatible and, preferably non-biodegradable, transponder can thus be produced. It is demonstrated that the porosity of these casings allows for the adhesion and ingrowth of surrounding host cells and thus such porous hollow objects as defined herein function as anti-migration casings.

Thus, a first aspect of the present invention relates to a porous hollow object, comprising at least one polymer.

In a preferred embodiment the object consists at least of polymeric nanofibres.

In another preferred embodiment the object has a three-dimensional structure of a non-woven mat.

In another preferred embodiment the object has a porosity of between 30 to 90%, 50 to 90%, or 60 to 80%.

In another preferred embodiment the object is non-biodegradable for at least 6 months.

In another preferred embodiment the object is biocompatible.

In another preferred embodiment the object is an anti-migration casing.

In another preferred embodiment the object comprises at least the polymer PET.

Another aspect of the invention relates to an apparatus for the production of a porous object as defined herein wherein said apparatus comprises at least:
a) an enclosure/ syringe suitable for storage of a substance and suitable for provision of said substance to the tip of an electrospinning element,
b) an electrospinning-element,
c) a high voltage power supply,
d) a collector-element, and
e) a counter electrode.

In a preferred embodiment of the apparatus as described herein above the collector-element is positioned such that there is a distance of at least 0,1cm, at least 0,2cm, at least 0,3cm, at least 0,4cm, at least 0,5cm, at least 0,6cm, least 0,7cm, at least 0,8cm, at least 0,9cm, at least 1,0cm, at least 1,5cm, at least 2cm between the collector-element and the counter-electrode.

In a preferred embodiment of the apparatus as described herein above the collector-element is rotated by its length-axis during the electrospinning process.

Another aspect of the present invention relates to a method for producing a porous object according as described herein, optionally employing an apparatus as described herein, the method comprising
a) providing a substance in an enclosure/syringe suitable for storage of a substance and suitable for provision of said substance to the tip of an electrospinning element,
b) applying an electrostatic potential,
c) electrospinning of said substance from a tip of an electrospinning element onto a collector-element,
d) drying the object, and
e) collecting the object from the collector-element.

Another aspect of the present invention relates to an implantable miniature transponder comprising at least a transponder unit and the porous hollow object or casing as defined herein optionally produced using the apparatus as described herein and/or produced by the method described herein, wherein the transponder unit is located inside the casing and the casing seals off the transponder.

Yet another aspect of the present invention relates to a method of assembling an implantable miniature transponder, the method comprising the steps of:
a) producing the porous hollow object or casing as described herein, optionally produced using the apparatus as described herein and/or produced by the method as defined herein,
b) inserting of a transponder unit into the casing, and
c) seating the casing.

Another aspect of the present invention relates to the use of an implantable miniature transponder as described herein or assembled as described herein as an identification tag for animals.

These and other characteristics, features and objectives of the present invention will become apparent from the following detailed description, taken in conjunction with the accompanying figures and examples, which demonstrate by way of illustration the principles of the invention.

The description is given for the sake of example only, without limiting the scope of the invention.

### Brief description of the drawings

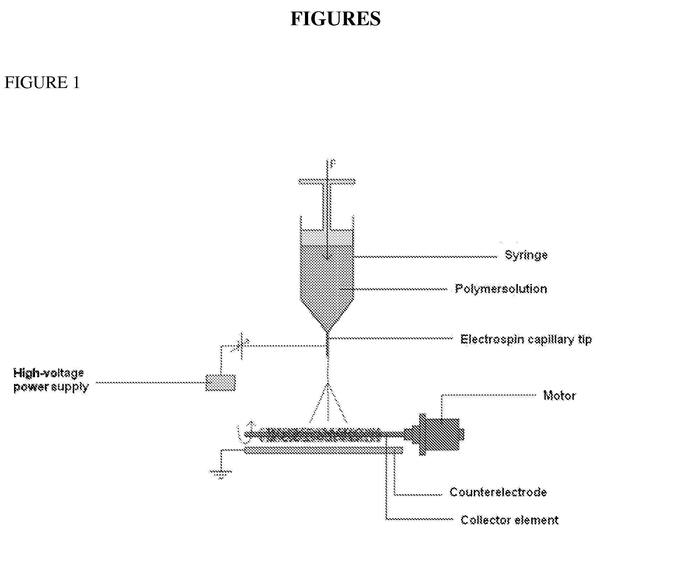

**Figure 1** depicts the novel electrospinning method of the invention which can be used to produce the porous hollow objects of the invention. As indicated, an enclosure/syringe suitable for the storage of a substance is providing a substance to the tip of an electrospinning element. In contrast to conventional methods a collector-element is placed between the tip of the electrospinning element and the counter electrode. The collector-element can be rotated, for example by using a motor. An electrostatic potential is applied, and the substance is electrospun from the tip of the electrospinning element onto the collector-element.

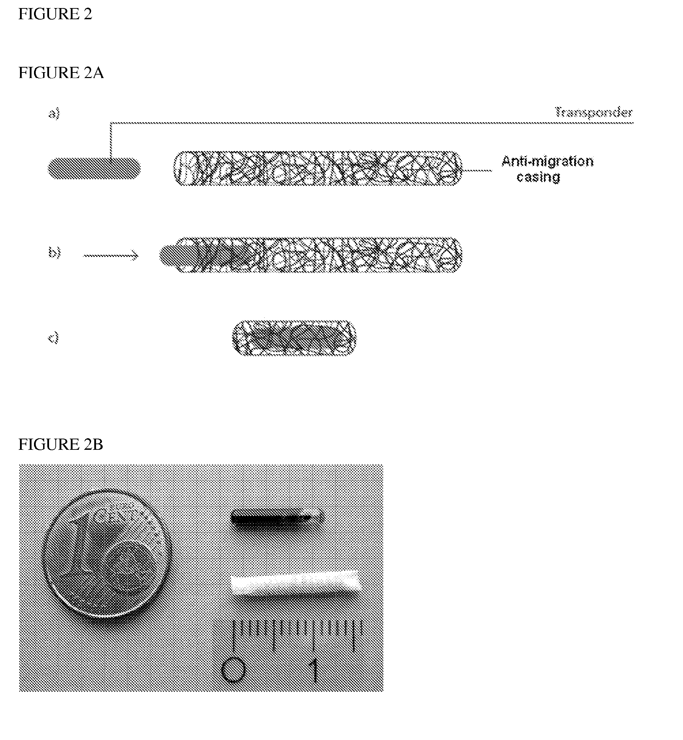

Figure 2 depicts the steps of introducing a transponder into a tubular anti-migration casing of the invention and the closing of the casing after insertion of the transponder (A) and displays a photograph of a transponder and a transponder encased into an anti-migration casing of the invention. A ruler is positioned under these objects, and a one cent coin functions as a comparative size scale (B).

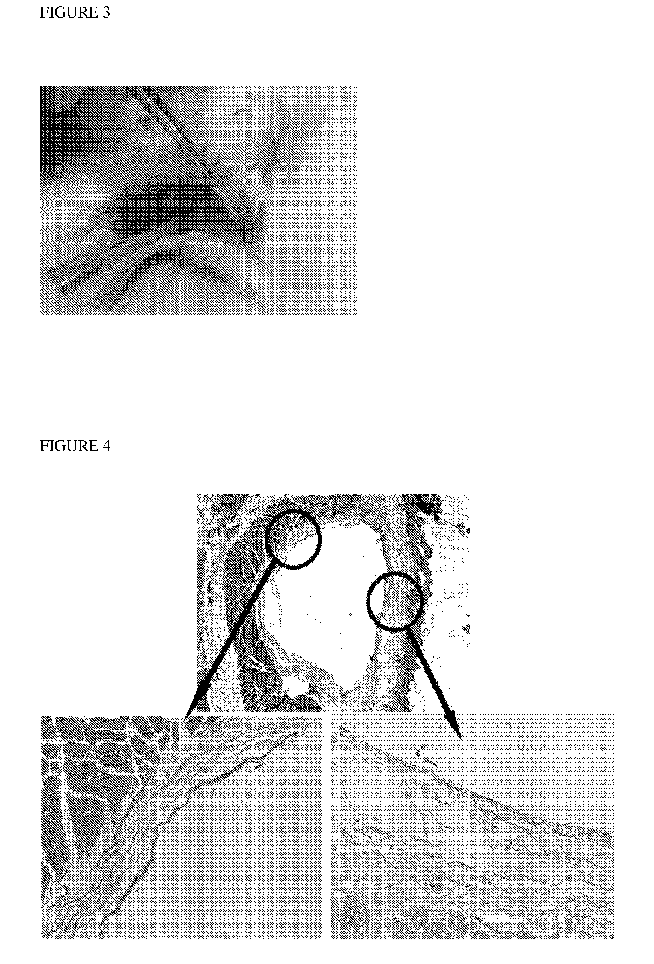

**Figure 3** is a picture by a digital camera demonstrating the preparation of a tissue sample from mice implanted with transponders. A longitudinal excision is made at the site of implantation, followed by surgical removal of a block of tissue containing the transponder (with or without the anti-migration casing), which is embedded and in a paraffin bath and then removed using forceps. For histological investigation the sections were microtomed from the remaining tissue blocks and stained with haematoxylin and eosin.
**Figure 4** is a light micrograph of a tissue section obtained from a mouse implanted with a transponder without casing for the period of four weeks. Tissue samples were embedded in paraffine (Histo-Comp^{®}, Vogel Wilhelm GmbH, Gieβen) and 3-5µm sections were prepared and mounted on cover slips. Following a hematoxylin-eosine (HE) staining, sections were inspected under the light-microscope. The pericapsular tissue (i.e. the tissue surrounding the transponder before it was removed) displays swelling and signs of inflammation.

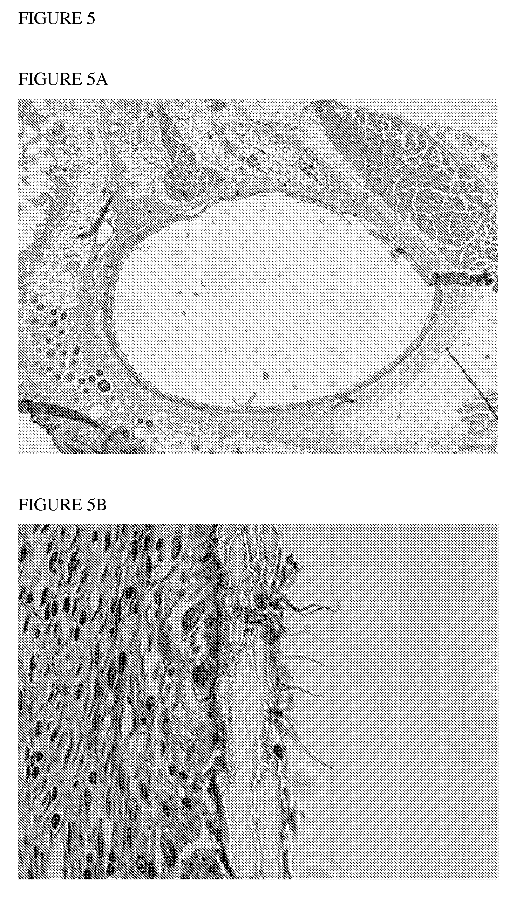

**Figure 5** is a light micrograph of a tissue section obtained from a mouse implanted with a transponder encased in an anti-migration casing of the invention for four wrecks. The anti-migration casing was produced using the polymer PET. Tissue samples were embedded in paraffine (Histo-Comp^{®}, Vogel Wilhelm GmbH, Gieβen) and 3-5 µm sections were prepared and mounted on cover slips. Following a hematoxylin-eosine (HE) staining, sections were inspected under the light-microscope. The pericapsular tissue shows no signs of inflammation or swelling (A). Cells of the surrounding connective tissue seem to have directly adhered to the surface of the anti-migration casing, indicating that the pericapsular tissue remains undamaged after microtoming and also seem to have grown into the anti-migration casing (B).

### Detailed description of the invention

A novel electrospinning method is presented that makes it possible to produce polymeric fibres and collect them on a rotating collector element, thus producing porous hollow objects that can be used as casings for transponders. Using the appropriate polymer(s) a biocompatible and, preferably non-biodegradable, transponder can thus be produced. It is demonstrated that the porosity of these casings allows for the adhesion and ingrowth of surrounding host cells and thus the porous hollow objects as defined herein function as anti-migration casings. Although the present invention will be described with respect to particular embodiments, this description is not to be construed in a limiting sense.

Before describing in detail exemplary embodiments of the present invention, definitions important for understanding the present invention are given.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 %.

It is to be understood that the term "comprising" is not limiting. For the purposes of the present invention the term "consisting of" is considered to be a preferred embodiment of the term "comprising of". If hereinafter a group is defined to comprise at least a certain number of embodiments, this is meant to also encompass a group which preferably consists of these embodiments only.

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In case the terms "first", "second", "third" or "(a)", "(b)", "(c)", "(d)" etc. relate to steps of a method or use there is no time or time interval coherence between the steps, i.e. the steps may be carried out simultaneously or there may be time intervals of seconds, minutes, hours, days, weeks, months or even years between such steps, unless otherwise indicated in the application as set forth herein above or below,

It is to be understood that this invention is not limited to the particular methodology, protocols, reagents etc. described herein as these may vary. It is also to be understood that the terminology used herein is for the purpose of describing particular embodiments only, and is not intended to limit the scope of the present invention that will be limited only by the appended claims. Unless defined otherwise, all technical and scientific terms used herein have the same meanings as commonly understood by one of ordinary skill in the art.

Typically in the electrospinning process an electrostatic potential is applied between a tip of an electrospinning element and a counter electrode. A polymer-melt or polymer-solution is is pumped through the electrospinning element and thus protrudes from the tip of the electrospinning element. The electrostatic potential counteracts the surface tension of the polymer-melt or -solution and if the correct viscosity of the polymer-liquid is used, a fiber, the so-called "jet" is formed. This electrically charged jet, which now pulls more polymer-melt or -solution out of the tip is now accelerating towards the counterelectrode in which process it is subject to a nonaxisymmetric, or "whipping"' instability that causes bending and stretching of the jet. During the flight towards the counter electrode the jet cools and the solvent (of the polymer-melt or -solution) dries, so that fibres are formed, which can have a diameter of nanometers up to micrometers.

It is demonstrated that by electrospinning of a polymer-melt or polymer-solution into nanofibres, microfibres, or combinations thereof, onto a rotating collector-element, a plurality of porous hollow objects consisting of polymeric fibres can be produced fast and efficiently. As is shown in Figure 1, by placing a tubular motor-driven rotating collector-element between the syringe and the counter electrode tubular hollow objects can be produced.

By varying parameters such as the choice of polymer-melt, or-solution (polymer-concentration, solvent), the electrospinning conditions (flow-rate of the polymer-melt, or -solution, strength of the electrical field, the working distance between tip and counter electrode) and, importantly, the dimension, shape and rotating speed of the collector element, basically any type of fibre mats can be produced. Further by choosing non-biodegradable but biocompatible polymer(s) it is possible to use such a hollow object as a casing for any device, sensor, implement, tool, gadget and the like that purposefully can be implanted into the body of an animal, e.g. a RFID-transponder.

Thus, one aspect of the invention relates to a porous hollow object comprising at least one polymer.

The term "hollow object" refers to any material body that comprises, surrounds or contains space. The porous hollow object of the invention can be any item, body, structure, matter and the like, such as a tube, a sphere, a cube, a polygon or any other shape that comprises, surrounds or contains space.

The porous hollow object comprising at least one polymer can be produced using any suitable polymer or polymers.

Advantageously the at least one polymer is a liquid or can be transferred into the liquid phase. It is preferred that the at least one polymer can be melted and/or dissolved in a solvent. The at least one polymer is preferably commercially available or can be produced according to methods known to the skilled person. Part of the invention are any naturally occurring polymers, any synthetic polymers, or mixtures thereof, any polymer blends, or copolymers made up of at least two monomers.

The term "polymer" refers to a molecule composed of repeating structural units typically connected by covalent chemical bonds.

Examples for polymers according to the invention are polyesters, polyamides, polyimides, polyethers, polyolefines, polyesters, polyurethanes, natural polymers, polysaccharides, polylactides, polyglycosides, poly-(alkyl)-methylstyroles, polymethacrylates, polyacrylnitriles, polyalkylenoxides from ethylenoxide and/or propylenoxide and mixtures thereof.

Preferred polymers or copolymers are selected from the group consisting of poly-(p-xylylen) (Parylene); polyvinyliden halogenides, polyesters such as polyethylene terephthalate (PET), polybutylen terephthalat (PBT); polycaprolactame (PA6), poly-*N,N*'-hexamethylenadipindiamide (PA6.6), poly-hexamethylensebacamide (PA6.10), poly-hexamethylendodecandiamide (PA6.12), polyundecanolactame (PA11) and polylauryllactame (PA12.)); polyisobutylene (PIB), polybutylene (PB)); polystyrole (PS), polymethylmethacrylate (PMMA), polyimide (PI), polybismaleinimide (PBMI), polybenzimidazole (PBI), Polyoxadiazobenzimidazol (PBO), the thermoplastic polyamidimide (PAI), polyimidsulfone (PISO), polymethacrylimide (PMI)), polyethers; polyolefines such as polyethylene (PE), polypropylene (PP), poly(ethylen/propylen) (EPDM); polycarbonate (PC); polyurethane (PU); natural polymers, e.g. rubber; latex; polycarbonic acids; polysulfonic acid; sulfated polysaccharides; polylactides; polyglycosides; polyamides; homo- und copolymerisates of aromatic vinyl compounds, e.g. poly(alkyl)styroles, e.g. polystyroles, poly-alpha-methylstyrole; polyacryl-nitriles, polymethacrylnitriles; polyacrylamides; polyimides; polyphenylenes; polylactocaprone (PCL), polysilanes; polysiloxanes; polybenzimidazoles; polybenzothiazoles; polyoxazoles; polysulfides; polyesteramides; polyarylen- vinylenes; polyetherketones; polyurethanes, polysulfones, anorganic-organic hybridpolymeres, e.g. ORMOCER® of the Fraunhofer Gesellschaft zur Förderung der angewandten Forschung e.V. München; silicone; fully aromatic copolyesters; poly(alkyl)acrylates; poly(alkyl)methacrylates; polyhydroxyethylmethacrylates; poly-vinylacetates, polyvinylbutyrates; Ethylenvinylacetat (EVA); polyisoprenes; synthetic rubbers, e.g. chloroprenes, e.g. Neopren® of DuPont; nitril- chloroprenes, e.g. Buna N®; polybutadienes; polytetrafluorethylenes; modified and non modified celluloses, homo- and copolymerisates of alpha-olefines und copolymers of two or more of the monomers that form the above mentioned polymers; polyvinylalcoholes, polyalkylenoxides, e.g. polyethylenoxides; poly-N-vinylpyrrolidones; hydroxymethylcelluloses; maleic acids; polyhydroxybutyrate (PHB), polycaproactone (PCL), polybutylensuccinate (PBS), polylactide (PLA), alginates; polyglykosides, poly-(alkyl)-methylstyrole, polymethacrylates, polyacrylnitriles, polyalkylenoxides from ethylenoxide and/or propylenoxide and mixtures thereof; polysaccharides, e.g. chitosanes, etc.; proteins, e.g. collagens, gelatins; and their homo- or copolymerisates and mixtures thereof.

As mentioned above the porous hollow object can be produced by a novel method of electrospinning. Alternatively, the porous hollow object of the invention is produced by another method of polymer spinning, e.g. wet spinning. This process is used for polymers that need to be dissolved in a solvent to be spun. The spinneret is submerged in a chemical bath that causes the fiber to precipitate, and then solidity, as it emerges. The process gets its name from this "wet" bath. Acrylic, rayon, aramid, modacrylic, and spandex are produced via this process.

Another option to produce the porous hollow object of the invention is dry spinning. Dry spinning is also used for polymer that must be dissolved in solvent. It differs in that the solidification is achieved through evaporating the solvent. This is usually achieved by a stream of air or inert gas. Because there is no precipitating liquid involved, the fiber does not need to be dried, and the solvent is more easily recovered; acetate, triacetate, acrylic, modacrylic, polybenzimidazole fiber, spandex, and vinyon are produced via this process.

Another option to produce the porous hollow object of the invention is melt spinning. Melt spinning is used for polymers that can be melted. The polymer solidifies by cooling after being extruded from the spinneret. Nylon, olefin, polyester, saran, and sulfar are produced via this process.

Another option to produce the porous hollow object of the invention is extrusion spinning. To prepare a polymer melt one possibility is to feed the solid polymer as pellets or granules to an extruder, The polymer pellets will be compressed, heated up and melted by an extrusion screw and fed to a spinning pump from where the melt is entering the spinneret.

Another option to produce the porous hollow object of the invention is direct spinning. The direct spinning process is avoiding the stage of solid polymer pellets. The polymer melt is produced from the raw materials and from polymer finisher directly pumped to the spinning mill. Direct spinning is mainly applied during production of polyester fibers and filaments.

Another option to produce the porous hollow object of the invention is Gel spinning. Gel spinning, also known as dry-wet spinning, is used to obtain high strength or other special properties in the fibers. The polymer is in a "gel" state, only partially liquid, which keeps the polymer chains somewhat bound together. These bonds produce strong inter-chain forces in the fiber, which increase its tensile strength. The polymer chains within the fibers also have a large degree of orientation, which increases strength, The fibers are first air dried, then cooled further in a liquid bath. Some high strength polyethylene and aramid fibers are produced via this process.

In a preferred embodiment the at least one polymer is a naturally occurring polymer.

In another preferred embodiment the at least one polymer is a synthetic polymer.

In another preferred embodiment the at least one polymer is a mixture of different polymers.

In a preferred embodiment the porous hollow object of the invention as defined herein above is made up of fibers.

The term "fibres" as used herein is refers to any type of string-like element, e.g. ligaments, fibrils, ribbons, ties, reels, lines, straps, bar, strips, lines or the like of any molecular composition. In a preferred embodiment the fibres comprise at least one polymer as defined herein above.

Thus, in another preferred embodiment of the invention the porous hollow object of the invention consists at least of polymeric fibres. Parts of the invention are porous hollow objects consisting of fibres having any kind of dimension. One possibility to classify polymeric fibres is their diameter. The skilled person is aware that, for example nano-, meso- and microfibers can be differentiated according to their diameter.

In another preferred embodiment the object consists at least of polymeric nanofibres.

In a preferred embodiment the nanofibres have a diameter of at least 50nm, at least 100nm, at least 150nm, at least 200nm, at least 250nm, at least 300nm, at least 350nm, at least 400nm, at least 450nm, at least 500nm, at least 550nm, at least 600nm, at least 650nm, at least 700nm, at least 750mn, at least 800nm, at least 850nm, at least 900nm, at least 950nm, at least 980nm, at least 990nm or at least 999nm.

In another preferred embodiment the object consists at least of polymeric microfibers.

In a preferred embodiment the microfibers have a diameter of at least 1µm, at least 2µm, at least 3µm, at least 4µm, at least 5µm, at least 6µm, at least 7µm, at least 8µm, at least 9µm, at least 10µm, at least 11µm, at least 12µm, at least 13µm, at least 14µm, at least 15µm, at least 50µm, at least 75µm or at least 100µm.

3Clearly, the skilled person can contemplate any possible combination or nano-, and/or meso-, and/or microfibers.

Thus, another preferred embodiment relates to the porous hollow object as described herein consisting at least of a mixture of polymeric nanofibres and polymeric microfibers,

Another preferred embodiment relates to the porous hollow object as described herein consisting at least of a mixture of polymeric nanofibres and polymeric mesofibers.

Another preferred embodiment relates to the porous hollow object as described herein above consisting at least of a mixture of polymeric mesofibres and polymeric microfibers.

An even more preferred embodiment of the invention relates to the porous hollow object as described herein consisting at least of fibres having a diameter of between about 200nm to 500 nm.

An even more preferred embodiment of the invention relates to the porous hollow object as described herein consisting at least of fibres having a diameter of between about 400nm to 800 nm.

An even more preferred embodiment of the invention relates to the porous hollow object as described herein consisting at least of fibres having a diameter of between about 500nm to 1500 nm.

Apart from the different dimensions of the used fibres as defined herein above, also the orientation of the fibres to each other will influence the three-dimensional surface structure of the porous hollow object as defined herein above.

In a preferred embodiment the fibres are parallel to each other.

In another preferred embodiment the fibres are not parallel to each other.

In another preferred embodiment the fibres display a 10, 20, 30, 40, 50, 60, 70, 80, or 90 degree angle to each other.

In a more preferred embodiment of the invention the fibres form an unordered array of fibres. The skilled person is aware of the fact, that unordered array of fibers or combinations of such arrays can form or create any type of three-dimensional surface structure.

In another preferred embodiment the fibres display an unordered array in such a way that the skilled person would refer to this three-dimensional surface structure as a "non-woven mat". Thus, in a most preferred embodiment the object has a three-dimensional surface structure of a non-woven mat.

The term "non-woven mat" refers to any crosslinked layer, matrix, mesh, web or the like consisting of fibers as defined herein. Explicitly contemplated are any polymer fibers as defined herein above, i.e. of different diameters and dimensions and/or scale, and any combinations thereof, thus creating an indefinite number of possible spatial relief-like structures, with characteristics of fibrillar networks, layers, meshes, webs, matrices, sponges and the like. The skilled person is fully aware of the fact, that when combining fibres of any kind as defined herein to produce a porous hollow object as defined herein, one could describe the porous hollow object in terms of a solid object, that comprises holes, pores and the like.

However, such three-dimensional surface structures as referred to above can alternatively be described as a porous network of fibres or a porous matrix of fibres, a relief made up of fibres and so on. It is clear to the skilled person, that the boundaries between these two ways of describing the porous hollow object of the invention, that is, on the one side as a solid object that due to holes, pores etc. is "porous", and on the other side as a network, mesh etc. of fibres that contains pores, holes and the like and is "porous", is a flowing transition and both ways of describing the porous hollow object of the invention are contemplated in this invention.

It is understood that, depending on how tight or dense such fibers are combined into the above defined three-dimensional surface structures of the non-woven mat of the hollow object of the invention will be more or less porous.

The term "porosity" is used interchangeably with the term "porousness" and refers to the state or property of being porous, The term "porous" refers to any porous hollow object as defined herein, or any part thereof, that has pores, holes, capillaries, interstices, passages, crevices, indentations, or any other sort of deepenings. The term porous in the meaning of the present invention in particular refers to such pores, holes, interstices, passages, crevices, indentations, or any other sort of deepenings that form the three-dimensional surface structure of an object or are a part of it. Thus, on the one hand the term porous can refer to the above mentioned holes, pores etc. in an otherwise solid hollow object as defined herein above and below.

Alternatively and equally preferred, it is contemplated that any fibres, ligaments, ribbons, ties, reels, lines, straps, bar, strips, lines or any other string-like element of any molecular composition, in particular polymeric fibres of any dimension as defined above, can form and shape the porous hollow object of the invention into any any three-dimensional fabric, matrix, or sponge-like element that is made up of such fibers.

In a preferred embodiment the object has a three-dimensional surface structure of a "non-woven mat". Thus, and particularly preferred, the term "porous" on the other hand also describes the pores, holes, interstices, passages, crevices, indentations, or any other sort of deepenings that form the three-dimensional surface structure of a porous hollow object of the invention or are part of it. If a percentage is given for porosity or porousness the percentage refers to the ratio of the surface of all the pores in an object of the invention to the surface of the whole object. Alternatively, and also preferred if a percentage is given for porosity or porousness the percentage may also refer to the ratio of the volume of all the pores in an object of the invention to the volume of the whole object.

In a preferred embodiment of the invention the porous hollow object of the invention has a porosity of at least 10%. 20%, 30%, 40%, 50%, 60%, 70%, 80%, 90%; 95% or 99%.

In another preferred embodiment of the invention the porous hollow object as defined herein has a porosity of between 10 to 99%.

In another preferred embodiment of the invention the porous hollow object as defined herein has a porosity of between 30 to 90%.

In yet another preferred embodiment of the invention the porous hollow object as defined herein has a porosity of between 50 to 90%).

In an even more preferred embodiment of the invention the porous hollow object as defined herein object has a porosity of between 60 to 80%.

In a most preferred embodiment of the invention the porous hollow object as defined herein has a porosity of about 80%_{.}

Another possibility to describe the porosity of the object of the invention is by pore size. As laid out above this term is to be seen as being interchangeably with the terms holes, interstices, passages, crevices, indentations, or any other sort of deepenings that form the three-dimensional surface structure of a non-woven mat of a porous hollow object as defined herein or are part of it, as defined herein.

In a preferred embodiment of the invention the size of the pores in the object as defined herein above is at least 100nm, at least 200nm, at least 300 nm, at least 400 nm, at least 500 nm, at least 600nm, at least 700nm, at least 800 nm, at least 900nm or at least 1µm.

It is clear from the above that employing the novel methodology as described herein and below any kind of porous hollow object consisting at least of one polymer can be obtained. Due to the large number of functional characteristics of polymers know to the skilled person, porous hollow objects with a myriad of functional qualities can be produced, i.e. porous hollow objects that are inert, fire-proof, odorless, resistant to destruction by heat, UV-radiation, organic solvents and the like, fluorescent, biocompatible, non-biodegradable, non-biodegradable for a certain amount of time etc.

In a preferred embodiment the porous hollow object of the invention is transferred inside a body of an animal, i.e. when being used as a casing for an identification transponder. However, introduction of exogenous material into the body of an animal carries the risk that biochemical reactions in the animal might destroy any introduced foreign object over time. The term "biodegradable" refers to the possibility that the porous hollow object of the invention or parts of it will degrade over time by the action of enzymes, by hydrolytic action and/or by other similar mechanisms of the surrounding tissue, fluids or by cellular action in the body of an animal. Explicitly envisioned to address the problem of biodegradability is the use of any commercially available or any other non-biodegradable polymer. The term "non-biodegradable" as used herein refers to non-degradation of the polymer for at least 10 years, when brought into continuous contact, with any biological substance, i.e. from body fluids, cells, tissue etc., regardless if inside a body of an animal or outside the body of an animal,

In a preferred embodiment of the invention the object as defined herein above is non-biodegradable, As the object comprises at least one polymer such characteristics can be established, for example by the choice of the at least one polymer.

Examples of non-biodegradable polymers are ethylene vinyl acetate (EVA), polyesters (polycarbonate (PC), polyethylenterephthalate (PET), polybutylenterephthalate (PBT)); polyamides (polycaprolactam (PA6), poly-N,N'-hexamethylenadipindiamide (PA6.6), poly-hexamethylensebacamide (PA6.10), poly-hexamethylendodecandiamide (PA6.12), polyundecanolactam (PA11) and polylauryllactam (PA12)); polyolefines (polyethylene (PE), polypropylene (PP), polyisobutylene (PIB) und polybutylene (PB)); polyurethanene, polystyrole (PS), polymethylmethacrylat (PMMA), polyimides (polyimide (PI), polybismaleinimide (PBMI), polybenzimidazole (PBI) and polyoxadiazobenzimidazole (PBO) as well as the thermoplastic polyamidimide (PAI), polyimidsulfone (PISO) and polymethacrylimide (PMI)) or mixtures thereof.

As will be laid out above, the characteristics of the porous hollow object of the invention as defined herein above as an anti-migration casing for transponders rely on adherence of cells of an animal to the casing and/or ingrowth of cells of an animal into the casing (cf. below). Thus, the persistence of the porous hollow object of the invention or the transponder-casing at the site of implantation is crucial for its anti-migration-characteristics.

While it is preferred that the porous hollow object of the invention or the transponder-casing is therefore non-biodegradable, the adhesion and/or ingrowth of cells (cf. below) can also occur in a short period of time, thus also such casings are useful and form part of the invention that are non-biodegradable only for a comparatively short amount of time, i.e. less than 10 years.

Thus, in another preferred embodiment of the invention the object as defined herein above is non-biodegradable as defined herein above for at least 6 months. Polymeres that are non-biodegradbale for at least 6 months are e.g. polyhydroxybutyrate (PHB), polycaproactone (PCL), polybutylensuccinate (PBS) and polylactide (PLA).

In another preferred embodiment of the invention the object as defined herein above is non-biodegradable as defined herein above for at least 1 year, or 2 years.

Polymeres that are non-biodegradable for at least 1 year, or 2 years are e.g. polyhydroxybutyrate (PHB), polycaproactone (PCL), polybutylensuccinate (PBS) and polylactide (PLA).

Another problem often encountered with respect to transplantation of foreign objects into a body of an animal are adverse reactions of the animals immune system towards the introduced foreign object. It is therefore advantageous if the porous hollow object as defined herein is biocompatible. "Biocompatible" means that the object will not cause substantial tissue irritation, inflammation or necrosis at the target tissue site within all animal.

Thus, another preferred embodiment of the invention relates to the porous hollow object as defined herein above, wherein the object is biocompatible. Biocompatible polymers are known to the skilled person. Exemples of biocompatible polymers include ethylene vinyl acetate (EVA), polyethylenterephthalate (PET), polyhydroxybutyrate (PHB), polycaproactone (PCL), polybutylensuccinate (PBS) and polylactide (PLA), polycarbonates, polysulfones, polyvinyle chlorides (PVC), polyethylenes (PE), polypropylenes (PP), polymethylacrylates or derivatives, or combinations thereof.

In a particularly preferred embodiment the porous hollow object as defined herein is non-biodegradable for at least 6 months and is biocompatible.

In another particularly preferred embodiment, the porous hollow object as defined herein is non-biodegradable for at least 1 year and is biocompatible.

In another particularly preferred embodiment the porous hollow object as defined herein is non-biodegradable for at least 2. years and is biocompatible.

In yet another particularly preferred embodiment the porous hollow object as defined herein is non-biodegradable and is biocompatible.

Explicitly envisioned are also embodiments wherein the porous hollow object as defined herein comprises at least one polymer, wherein the polymer can be any mixture, blend or the like of the abovementioned non-biodegradable polymers, polymers that are non-biodegradable for at least 6 months, 1 year, or 2 years, and biocompatible polymers.

In a preferred embodiment the at least one polymer comprises PCL.

In a more preferred embodiment the at least one polymer is PCL.

In an even more preferred embodiment the at least one polymer is PCL and the fibres have a diameter of between about 400nm to 800nm.

In another preferred embodiment the at least one polymer comprises PLA.

In a more preferred embodiment the at least one polymer is PLA.

In a more preferred embodiment the at least one polymer is PLA and the fibres have a diameter of between about 500nm to 1500nm.

In another preferred embodiment the at least one polymer comprises PU.

In a more preferred embodiment the at least one polymer is PU.

In an even more preferred embodiment the at least one polymer is PU and the fibres have a diameter of between about 500nm to 1500nm.

In another preferred embodiment the at least one polymer comprises polyethylene (PE).

In a more preferred embodiment the at least one polymer is polyethylene (PE).

In another preferred embodiment the at least one polymer is ethylene vinyl acetate (EVA).

In yet another preferred embodiment the at least one polymer comprises polyethylenterephthalate (PET).

In a more preferred embodiment the at least one polymer is polyethylenterephthalate (PET).

In a most preferred embodiment the at least one polymer is polyethylenterephthalate (PET) and the fibres have a diameter of between about 200nm to 500nm.

Explicitly envisioned are also embodiments wherein the porous hollow object as defined herein comprises at least one polymer, wherein the polymer can be any mixture, blend or the like of the polymers, selected from the group of PLA, PU, PE, EVA and PET. It is apparent that such mixtures also feature the polymeric composition(s), measure(s) and feature(s) as described herein.

As set out above, and depicted in Figure 1, by electrospinning of a polymer-melt, or -solution on to a rotating collector element the porous hollow objects of the invention are produced. Because the electrospun fibres are directly collected on the collector-element, the collector-element acts as a kind of template for the shape, dimension and cross-section characteristics of the porous, hollow objects as defined herein above. Explicitly envisioned as being part of the present invention are any kind of geometrical shapes, figures, i.e. a tube, a sphere, a cube, a polygon or any other shape that comprises, surrounds or contains space. It is thus a unique feature of the present invention that by choosing and/or designing the collector-element, literally any size or shape of porous hollow objects can be realized, Importantly, depending on the use of the porous, hollow objects of the invention, different shapes and sizes of such objects are needed. Thus, for example, by using a collector-element with a cylindrical-cross section, a porous hollow object with cylindrical-cross section will be produced.

In a preferred embodiment of the invention the object comprises a cylindrical cross-section.

In another preferred embodiment of the invention the object comprises any trilateral, quadrilateral, pentalateral, hexalateral, heptalateral, octalateral or any other polylateral cross-section.

Obviously, the porous hollow object of the invention might be used as any kind of sheath, hull, shell, case, jacket and the like.

In another preferred embodiment of the invention the object as defined herein above is suitable as a casing.

In another preferred embodiment of the invention the porous hollow object as defined herein above is suitable as a casing for a transponder.

The term "transponder" as used herein refers to any radio frequency identity device that is known to the skilled person and/or commercially available. Such transponders often have a tubular shape.

Thus, in another preferred embodiment of the invention the porous hollow object as defined herein above comprises a tubular shape.

As laid out above radio frequency identity devices are used to track and identify all kinds of animals, from cattle, livestock, laboratory animals to animal pets. Thus such transponders encased in the porous hollow object as defined herein or anti-migration casing are typically injected into an animal, e.g. under the skin of the animal.

In a preferred embodiment the porous hollow object of the invention is used inside a body of an animal. Preferably, the animal is selected from the group consisting of mammals, reptiles, fishes and birds. Most preferably the animal is a mammal.

As mentioned above the migration of transponders in the animal is a major caveat of standard protocols for implantation of RFID-transponders. It is demonstrated that the porous hollow object of the invention, preferably with a "non-woven mat" three dimensional surface structure, allows for adhesion and ingrowth of cells of the animal after transplantation, thus preventing migration of transponders.

The plethora of possible "non woven mat"-arrangements that make up the porous hollow objects of the invention are characterized by a high specific surface and the high aspect-ratio (high ratio of length vs. width) that displays tremendous capacity for adhesion, binding, absorption, adsorption, conjugation of any molecules, ions, compounds, substances, agents, functional groups with or without pharmaceutical activity and the like. Such adhesion, binding, absorption, adsorption, conjugation as mentioned herein of course also refers to all biomolecules. The term "biomolecules" refers to all organic or anorganic molecules found inside an animal, regardless if they are extracted, isolated or otherwise obtained from an animal or if they are produced outside an animal. Thus, as cells, functional groups of cells, tissues organs and the like consist of biomolecules, i,e. lipids, proteins, carbohydrates, bases, acids, DNA, salts, solutes, ions, other organic and inorganic molecules and/or substances and the like, the skilled person is fully aware that adhesion, binding, absorption, adsorption, conjugation of the above mentioned biomolecules equals adhesion, binding, absorption, adsorption, conjugation of cells, tissues etc. of an animal, regardless if the porous, hollow objects as described above contacts the cells etc. inside our outside an animal.

In another preferred embodiment of the invention the porous hollow object as defined herein above, allows for the adhesion of biomolecules.

In another preferred embodiment of the invention the porous hollow object as defined herein above, allows for the adhesion of cells of an animal.

In a more preferred embodiment of the invention the porous hollow object as defined herein above, allows for the adhesion of cells of a mammal.

The term "adhesion of cells" is used interchangeably with the above mentioned terms of binding, absorption, adsorption, conjugation etc. and refers to the well-known phenomenon that any type or kind of cell of an animal is able to bind to other cells. Such cell-cell contacts are typically established and maintained by interactions between cellular proteins, glycoproteins, lipids, carbohydrates or any combination thereof found on the cellular surface or membrane, and extracellular proteins, glycoproteins, lipids, carbohydrates, or any combination thereof, Thus, cells adhere to other cells or to any suitable substrate, matrix or the like. The term explicitly includes also situations where a cell (via its proteins, glycoproteins, lipids, carbohydrates or any combination thereof) establishes and maintains interactions, i.e, makes contact and adheres, to any kind of porous hollow object as defined herein above, consisting at least of a polymer, co-polymer or mixtures thereof as described herein above. Thus, following implantation the cells of a surrounding tissue in the transplanted animal establish and maintain adhesion to the porous hollow object or transponder casing. Typically, these might be cells of the connective tissue such as fibroblasts, cartilage cells, bone cells, blood cells, i.e. leukocytes, macrophages etc. Therefore, through adhesion of neighbouring cells the transponder casing will not relocalize and will stay in the site of transplantation, thus migration of the transponder is prevented.

In another preferred embodiment of the invention the object porous hollow as defined herein above, allows for the ingrowth of cells of an animal into the object.

In another preferred embodiment of the invention the object porous hollow as defined herein above, allows for the ingrowth of cells of a mammal into the object. The term "ingrowth of cells" refers to the fact, that, given the conditions are suitable, following adhesion as defined herein above the animal cells adhered to the porous hollow object or casing of the transponder can grow into any hollow space, pore, deepening etc. as defined herein above of the porous hollow object or casing of the transponder. As mentioned above the three-dimensional structure or "non-woven mat" structure of the porous hollow object of the invention can comprise any sort or type of pores, holes, interstices, passages, crevices, indentations, or any other sort of deepenings into which the surrounding cells can grow. Thus new tissue will protrude into the pores, holes etc due to proliferation and adhesion of a multitude of cells, which will prevent re-localization of the porous hollow object of the invention or and thus will prevent migration of the encased transponder from the site of transplantation.

It is clear from the above that using a porous hollow object as defined herein as a casing for a RFID-transponder as defined herein above will prevent the encased transponder from migrating away from the site of transplantation, i,e, by the processes of adhesion of cells of an animal to the porous hollow object and/or ingrowth of cells of an animal into the porous hollow object as defined herein.

Thus, in a particularly preferred embodiment of the invention the porous hollow object as defined herein above is an anti-migration casing.

In an even more preferred embodiment of the invention the porous hollow object as defined herein is a biocompatible, non-biodegradable anti-migration casing.

Alternatively and also preferred the porous hollow object as defined herein is a biocompatible, anti-migration casing that is non-biodegradable for at least six months, as defined herein above.

It is apparent that its high aspect ratio as laid out above also predisposes the porous hollow object of the invention also as a carrier for suitable compounds. Thus, another aspect of the invention relates to the adhesion, binding, absorption, adsorption, conjugation of compounds to the porous hollow object as defined herein. Any compound, substance, molecule and the like that has advantageous characteristics when administered into an animal and/or mammal is explicitly contemplated in this respect.

Preferred compounds are pharmaceutically active. Even more preferred compounds have antibiotic, anti-inflammatory or analgesic activity.

The porous hollow object comprising at least one polymer of the invention can be produced using any suitable method or process known in the art as defined herein above and with which the at least one polymer can be processed, fabricated or manipulated such, that a porous hollow object comprising at least one polymer as defined herein is produced.

Preferably such method or process features the production, fabrication etc. of the at least one polymer into fibres.

In a preferred embodiment the porous hollow object comprising at least one polymer as defined herein above is produced by electrospray-methods.

In a preferred embodiment the porous hollow object comprising at least one polymer as defined herein above is produced by electrosprinning-methods.

In a preferred embodiment, the porous hollow object comprising at least one polymer as defined herein above is produced by an electrosprinning method, in which a polymer solution is electrospun into fibers.

In another preferred embodiment the porous hollow object comprising at least one polymer as defined herein above is produced by an electrospinning method, in which a polymer solution is electrospun into fibers and then collected on a collector element. As depicted in Figure 1, such an apparatus allows for the production of porous, hollow objects.

Another aspect of the invention thus relates to an apparatus for the production of a porous object as defined herein above wherein said apparatus comprises at least:
a) an enclosure/syringe suitable for storage of a substance and suitable for provision of said substance to the tip of an electrospinning element,
b) an electrospinning-element
c) a high voltage power supply,
d) a collector-element, and
e) a counter electrode.

As laid out above the porous hollow object as defined herein above is preferentially composed of fibers.

Thus, a preferred embodiment of the invention relates to an apparatus as described above, wherein fibers can be composed of said substance.

In line with the above explanations and descriptions, the preferred substance to be used for electrospinning when employing the above apparatus for the production of the porous, hollow object as defined herein above out of fibers as defined herein above, are polymers, that is, at least one polymer.

Thus, another preferred embodiment of the invention relates to an apparatus as described above, wherein the substance comprises at least one polymer.

A preferred embodiment of the invention relates to an apparatus as described above, wherein the substance comprises at least one polymer selected from the group consisting of polyesters, polyamides, polyimides, polyethers, polyolefines, polyesters, polyurethanes, natural polymers, polysaccharides, polylactides, polyglyko-sides, poly-(alkyl)-methylstyroles, polymethacrylates, polyacrylnitriles, polyalkylenoxides from ethylenoxide and/or propylenoxide and mixtures thereof. Preferred polymers or copolymers are selected from the group consisting of poly-(p-xylylen) (Parylene); polyvinyliden halogenides, polyesters such as polyethylene terephthalate (PET), polybutylen terephthalat (PBT); polycaprolactame (PA6), poly-*N,N*'-hexamethylenadipindiamide (PA6.6), poly-hexamethylensebacamide (PA6.10), poly-hexamethylendodecandiamide (PA6.12), polyundecanolactame (PA11) and polylauryllactame (PA12)); polyisobutylene (PIB), polybutylene (PB)); polystyrole (PS), polymethylmethacrylate (PMMA), polyimide (PI), polybismaleinimide (PBMI), polybenzimidazole (PBI), Polyoxadiazobenzimidazol (PBO), the thermoplastic polyamidimide (PAI), polyimidsulfone (PISO), polymethacrylimide (PMI)), polyethers; polyolefines such as polyethylene (PE), polypropylene (PP), poly(ethylen/propylen) (EPDM); polycarbonate (PC); polyurethane (PU); natural polymers, e.g. rubber; latex; polycarbonic acids; polysulfonic acid; sulfated polysaccharides; polylactides; polyglycosides; polyamides; homo- und copolymerisates of aromatic vinyl compounds, e.g. poly(alkyl)styroles, e.g. polystyroles, poly-alpha-methylstyrole; polyacryl-nitriles, polymethacrylnitriles; polyacrylamides; polyimides; polyphenylenes; polylactocaprone (PCL), polysilanes; polysiloxanes; polybenzimidazoles; polybenzothiazoles; polyoxazoles; polysulfides; polyesteramides; polyarylen- vinylenes; polyetherketones; polyurethanes, polysulfones, anorganic-organic hybridpolymeres, e.g. ORMOCER® of the Fraunhofer Gesellschaft zur Förderung der angewandten Forschung e.V. München; silicone; fully aromatic copolyesters; poly(alkyl)acrylates; poly(alkyl)methacrylates; polyhydroxyethylmethacrylates; poly-vinylacetates, polyvinylbutyrates; Ethylenvinylacetat (EVA); polyisoprenes, synthetic rubbers, e.g. chloroprenes, e.g. Neopren® of DuPont; nitril- chloroprenes, e,g, Buna N®; polybutadienes; polytetrafluorethylenes; modified and non modified celluloses, homo- and copolymerisates of alpha-olefines und copolymers of two or more of the monomers that form the above mentioned polymers; polyvinylalcoholes, polyalkylenoxides, e.g. polyethylenoxides; poly-N-vinylpyrrolidones, hydroxymethylcelluloses; maleic acids; polyhydroxybutyrate (PHB), polycaproactone (PCL), polybutylensuccinate (PBS), polylactide (PLA), alginates; polyglykosides, poly-(alkyl)-methylstyrole, polymethacrylates, polyacrylnitriles, polyalkylenoxides from ethylenoxide and/or propylenoxide and mixtures thereof, polysaccharides, e.g. chitosanes, etc.; proteins, e.g. collagens, gelatins; and their homo- or copolyrnerisates and mixtures thereof.

Particularly preferred polymers are ethylene vinyl acetate (EVA), polyesters (polycarbonate (PC), polyethylenterephthalate (PET), polybutylenterephthalate (PBT)); polyamides (polycaprolactam (PA6), poly-*N*,*N*'-hexamethylenadipindiamide (PA6.6), poly-hexamethylensebacamide (PA6.10), poly-hexamethylendodecandiamide (PA6.12), polyundecanolactam (PA11) and polylauryllactam (PA 12)); polyolefines (polyethylene (PE), polypropylene (PP), polyisobutylene (PIB) und polybutylene (PB)); polyurethanene, polystyrole (PS), polymethylmethacrylat (PMMA), polyimides (polyimide (PI), polybismaleinimide (PBMI), polybenzimidazole (PBI) and polyoxadiazobenzimidazole (PBO) as well as the thermoplastic polyamidimide (PAI), polyimidsulfone (PISO) and polymethacrylimide (PMI)) or mixtures thereof.

Especially preferred polymers are ethylene vinyl acetate (EVA), polyethylenterephthalate (PET), polyhydroxybutyrate (PHB), polycaproactone (PCL), polybutylensuccinate (PBS) and polylactide (PLA), polycarbonates, polysulfones, polyvinyle chlorides (PVC), polyethylenes (PE), polypropylenes (PP), polymethylacrylates or derivatives, or combinations thereof.

Another preferred embodiment, relates to an apparatus as defined herein above, wherein the substance comprises a polymer melt or polymer solution comprising at least one polymer.

The skilled person is aware that electrospinning-elements can have varying tips, i.e. variations in the diameter of the cross-section, different materials etc. The skilled person is aware of the different capillary tips that can be part of the above apparatuses, and that can be employed to produce the porous hollow objects as defined above.

Another preferred embodiment relates to an apparatus as defined herein above, wherein the electrospinning-element comprises a capillary tip suitable for the extrusion of the polymer melt or polymer solution.

As set out above and depicted in Figure 1, by electrospinning of a polymer-melt, or - solution on to a rotating collector element the porous hollow objects of the invention are produced. The collector-element can be of any material, substance, and/or composition that will allow coiling, reeling up etc. of a jet of polymer-melt or - solution as defined herein.

A preferred embodiment relates to an apparatus as defined herein above, wherein the collector-element is made of metal,

Another preferred embodiment, relates to an apparatus as defined herein above, wherein the collector-element is made of steel.

Another preferred embodiment relates to an apparatus as defined herein above, wherein the collector-element is made of aluminium.

Because the electrospun fibres are directly collected on the collector-element, the collector-element acts as a kind of template for the shape, dimension and cross-section characteristics of the porous, hollow objects as defined herein above, Explicitly envisioned as being part of the present invention are any kind of geometrical shapes, figures, i.e. a tube, a sphere, a cube, a polygon or any other shape that comprises, surrounds or contains space. Thus, for example, by using a collector-element with a cylindrical-cross section, a porous hollow object with cylindrical-cross section will be produced. It is thus a unique feature of the present invention that by choosing and/or designing the collector-element, literally any size or shape of porous hollow objects can be realized, Explicitly envisioned are all kinds of cross-section characteristics, measures, types etc. that are known to the skilled artisan.

A preferred embodiment of the invention relates to an apparatus as defined herein above, wherein the collector-element comprises a cylindrical cross-section.

Another preferred embodiment relates to an apparatus as defined herein above, wherein the collector-element comprises any trilateral, quadrilateral, pentalateral, hexalateral, heptalateral, octalateral or any other polylateral cross-section.

A preferred embodiment of the invention relates to the use of the porous hollow objects as defined herein above as an anti-migration casing for a transponder, as described above. As such transponders are mostly of a cylindrical shape a tubular casing is preferred. Alternatively, a sphere, a cube, a polygon or any other shape that comprises, surrounds or contains space is contemplated. To produce a tubular anti-migration casing using the above apparatus, a collector-element with a bar- or stick-like shape can be used.

Another preferred embodiment relates to an apparatus as defined herein above, wherein the collector-element is rod-shaped.

Another preferred embodiment relates to an apparatus as defined herein above, wherein the collector-element is pole-shaped.

As laid out above, in contrast to conventional appparatuses for electrospinning, in the apparatus of the present invention a collector-element is placed between the tip of the electrospinning element and the counterelectrode, This collector-element can be rotated by its length-axis.

Thus, another preferred embodiment relates to an apparatus as defined herein above, wherein the collector-element is rotated by its length-axis during the electrospinning process.

The skilled person is aware that any means to rotate the collector-element of the invention can be employed, as long as the collector-element is rotated by its length-axis during the electrospinning process.

Another preferred embodiment relates to an apparatus as defined herein above, wherein the collector-element is rotated by its length-axis during the electrospinning process by a motor.

Preferably the motor is an electro-motor.

Preferably the motor runs at least with 50rpm, 100rpm, 150rpm, 200rpm, 250rpm, 300rpm, 350rpm, 400rpm, 450rpm, 500 rpm, 600 rpm, 700rpm, 800rpm, 900 rpm, 1000rpm, or 1200 rpm.

Most preferably the motor runs with about 800rpm.

Importantly, by varying the dimension, shape and rotating speed of the collector element, basically any type of fibre mats can be produced and any shape or size of the porous hollow objects as defined herein above can be realized.

As was laid out above, it was demonstrated that positioning a collector-element between the tip of an electrospinning-element and the counter-electrode it is possible to produce a multitude of porous hollow objects from polymeric fibres. The distance between the collector-element and the counter-electrode can be varied.

A preferred embodiment of the invention relates to an apparatus as defined herein above, wherein the collector-element is positioned such that there is a distance of at least 0,1cm, at least 0,2cm, at least 0,3cm, at least 0,4cm, at least 0,5cm, at least 0,6cm, least 0,7cm, at least 0,8cm, at least 0,9cm, at least 1,0cm, at least 1,5cm, at least 2cm between the collector-element and the counter-electrode.

An even more preferred embodiment of the invention relates to an apparatus as defined herein above, wherein the collector-element is positioned such that there is a distance of at least 0,5cm between the collector-element and the counter-electrode.

Another aspect of the present invention relates to the porous hollow object as defined herein above produced with the apparatus as defined herein above.

Another aspect of the invention relates to a method for producing a porous hollow object as defined herein above optionally employing an apparatus as defined herein above, the method comprising
a) providing a substance in an enclosure/ syringe suitable for storage of a substance and suitable for provision of said substance to the tip of an electrospinning element,
b) applying an electrostatic potential
c) electrospinning of said solution from a tip of an electrospinning element onto a collector-element,
d) drying the object, and
e) collecting the object from the collector-element,

As described above the porous hollow object preferably consists of at least one polymer.

Thus, another preferred embodiment of the invention relates to the method as defined herein above, wherein the substance comprises at least one polymer, as defined herein above,

A preferred embodiment of the invention relates to the method as defined herein above, wherein the at least polymer is selected from the group consisting of polyesters, polyamides, polyimides, polyethers, polyolefines, polyesters, polyurethanes, natural polymers, polysaccharides, polylactides, polyglyko-sides, poly-(alkyl)-methylstyroles, polymethacrylates, polyacrylnitriles, polyalkylenoxides from ethylenoxide and/or propylenoxide and mixtures thereof.

Preferred polymers or copolymers are selected from the group consisting of poly-(p-xylylen) (Parylene); polyvinyliden halogenides, polyesters such as polyethylene terephthalate (PET), polybutylen terephthalat (PBT); polycaprolactame (PA6), poly-*N,N*'-hexamethylenadipindiamide (PA6.6), poly-hexamethylensebacamide (PA6.10), poly-hexamethylendodecandiamide (PA6.12), polyundecanolactame (PA11) and polylauryllactame (PA12)); polyisobutylene (PIB), polybutylene (PB)); polystyrole (PS), polymethylmethacrylate (PMMA), polyimide (PI), polybismaleinimide (PBMI), polybenzimidazole (PBI), Polyoxadiazobenzimidazol (PBO), the thermoplastic polyamidimide (PAI), polyimidsulfone (PISO), polymethacrylimide (PMI)), polyethers; polyolefines such as polyethylene (PE), polypropylene (PP), poly(ethylen/propylen) (EPDM); polycarbonate (PC); polyurethane (PU); natural polymers, e.g. rubber; latex; polycarbonic acids; polysulfonic acid; sulfated polysaccharides; polylactides; polyglycosides; polyamides, homo- und copolymerisates of aromatic vinyl compounds, e.g. poly(alkyl)styroles, e.g. polystyroles, poly-alpha-methylstyrole; polyacryl-nitriles, polymethacrylnitriles; polyacrylamides; polyimides; polyphenylenes; polylactocaprone (PCL), polysilanes; polysiloxanes; polybenzimidazoles; polybenzothiazoles; polyoxazoles_{;} polysulfides; polyesteramides; polyarylen- vinylenes; polyetherketones; polyurethanes, polysulfones, anorganic-organic hybridpolymeres, e.g. ORMOCER® of the Fraunhofer Gesellschaft zur Förderung der angewandten Forschung e.V. München; silicone; fully aromatic copolyesters; poly(alkyl)acrylates; poly(alkyl)methacrylates; polyhydroxyethylmethacrylates; poly-vinylacetates, polyvinylbutyrates; Ethylenvinylacetat (EVA); polyisoprenes; synthetic rubbers, e.g. chloroprenes, e.g. Neopren® of DuPont; nitril- chloroprenes, e,g, Buna N®; polybutadienes; polytetrafluorethylenes; modified and non modified celluloses, homo- and copolymerisates of alpha-olefines und copolymers of two or more of the monomers that form the above mentioned polymers; polyvinylalcoholes, polyalkylenoxides, e.g. polyethylenoxides; poly-N-vinylpyrrolidones; hydroxymethylcelluloses; maleic acids; polyhydroxybutyrate (PHB), polycaproactone (PCL), polybutylensuccinate (PBS), polylactide (PLA), alginates; polyglykosides, poly-(alkyl)-methylstyrole, polymethacrylates, polyacrylnitriles, polyalkylenoxides from ethylenoxide and/or propylenoxide and mixtures thereof; polysaccharides, e.g. chitosanes, etc.; proteins, e.g. collagens, gelatins; and their homo- or copolymerisates and mixtures thereof. Particularly preferred polymers are ethylene vinyl acetate (EVA), polyesters (polycarbonate (PC), polyethylenterephthalate (PET), polybutylenterephthalate (PBT)); polyamides (polycaprolactam (PA6), poly-N,N'-hexamethylenadipindiamide (PA6.6), poly-hexamethylensebacamide (PA6.10), polyhexamethylendodecandiamide (PA6.12), polyundecanolactam (PA11) and polylauryllactam (PA12)); polyolefines (polyethylene (PE), polypropylene (PP), polyisobutylene (PIB) und polybutylene (PB)); polyurethanene, polystyrole (PS), polymethylmethacrylat (PMMA), polyimides (polyimide (PI), polybismaleinimide (PBMI), polybenzimidazole (PBI) and polyoxadiazobenzimidazole (PBO) as well as the thermoplastic polyamidimide (PAI), polyimidsulfone (PISO) and polymethacrylimide (PMI)) or mixtures thereof.

Especially preferred polymers are ethylene vinyl acetate (EVA), polyethylenterephthalate (PET), polyhydroxybutyrate (PHB), polycaproactone (PCL), polybutylensuccinate (PBS) and polylactide (PLA), polycarbonates, polysulfones, polyvinyle chlorides (PVC), polyethylenes (PE), polypropylenes (PP), polymethylacrylates or derivatives, or combinations thereof.

The skilled person is aware that for electrospinning polymers these compounds have to be liquified polymer-melts or polymer-solutions.

Thus, another preferred embodiment of the invention relates to the method as defined herein above, wherein the at least one polymer is a polymer-melt or polymer-solution.

In a preferred embodiment of the invention the solvent(s) used for the production of polymer-melts or polymer-solutions can be any solvent or mixture thereof.

In a preferred embodiment of the invention the solvent(s) used for the production of polymer-melts or polymer-solutions are selected from the group consisting of dichloromethane; chloroform; acetone; ethers, e.g.diethylether, methyl-tert.-butyl-ether; hydrocarbons with less than 10 carbon atoms, e.g. n-pentane, n-hexane, cyclohexane, heptane, octane; dimethylsulfoxide (DMSO), N-methylpyrrolidinone CNMP), dimethylformamide (DMF), hexafluorisopropanol (HFIP), trifluoroacetic acid (TFA), tetrahydrofuran (THF), formic acid, water, liquid sulfur dioxide, liquid ammonia and mixtures thereof.

In a particularly preferred embodiment the solvent is selected from the group consisting of formic acid, dichloromethane; acetone, chloroform; dimethylformamide (DMF); hexafluorisopropanol (FLFIP); tetrahydroturan (THF); trifluoroacetic acid (TFA) and mixtures thereof.

The production of a polymer-melt or polymer-solution requires mixing the at least one polymer, optionally with a solvent or a mixture of solvents. Any mixing method known to the skilled person and suitable for mixing polymers is contemplated.

Thus, another preferred embodiment of the invention relates to the method as defined herein above, wherein the mixing of the polymer-solution is performed under the influence of heat and/or ultrasound.

The skilled person is aware that depending on the desired characteristics and features of the polymeric fibres to be produced the concentration of the at least one polymer in the melt or solution can vary substantially. Any polymer concentration in the polymer-melt or -solution between 0,01% and 99% is contemplated as being part of the invention.

A preferred embodiment of the invention relates to the method as defined herein above, wherein the concentration of the at least one polymer is at least 0,1% (w/v)

Another preferred embodiment of the invention relates to the method as defined herein above, wherein the concentration of the at least one polymer is between 1 and 30% (w/v).

Another preferred embodiment of the invention relates to the method as defined herein above, wherein the concentration of the at least one polymer is between 2 and 20% (w/v).

Another preferred embodiment of the invention relates to the method as defined herein above, wherein the at least one polymer comprises PLA.

Another preferred embodiment of the invention relates to the method as defined herein above, wherein the at least one polymer is PLA.

Another preferred embodiment of the invention relates to the method as defined herein above, wherein the concentration of PLA is between 5 and 25%.

Another preferred embodiment of the invention relates to the method as defined herein above, wherein the concentration of PLA is between 10 and 15%.

Another preferred embodiment of the invention relates to the method as defined herein above, wherein the concentration of PLA is about 12% and the solvent is chloroform.

Another preferred embodiment of the invention relates to the method as defined herein above, wherein the concentration of PLA is about 15% and the solvent is TFA.

An even more preferred embodiment of the invention relates to the method as defined herein above, wherein the concentration of PLA is about 15%, the solvent is TFA and the produced fibres have a diameter of between about 500nm to 1500nm.

Another preferred embodiment of the invention relates to the method as defined herein above, wherein the at least one polymer comprises PCL.

Another preferred embodiment of the invention relates to the method as defined herein above, wherein the at least one polymer is PCL.

Another preferred embodiment of the invention relates to the method as defined herein above, wherein the concentration of PCL is between 5 and 25%.

Another preferred embodiment of the invention relates to the method as defined herein above, wherein the concentration of PCL is about 10%.

Another preferred embodiment of the invention relates to the method as defined herein above, wherein the concentration of PCL is about 10% and the solvent is selected from the group consisting of chloroform, TFA and HFIP. Alternatively, the solvent is HFIP.

Another even more preferred embodiment of the invention relates to the method as defined herein above, wherein the concentration of PCL is about 10% and the solvent is selected from the group consisting of chloroform, TFA and HFIP, alternatively the solvent is HFIP and the produced fibres have a diameter of between about 400nm to 800nm.

Another preferred embodiment of the invention relates to the method as defined herein above, wherein the at least one polymer comprises PU.

Another preferred embodiment of the invention relates to the method as defined herein above, wherein the at least one polymer is PU.

Another preferred embodiment, of the invention relates to the method as defined herein above, wherein the concentration of PU is between 5 and 25%.

Another preferred embodiment of the invention relates to the method as defined herein above, wherein the concentration of PU is about 10%.

Another preferred embodiment of the invention relates to the method as defined herein above, wherein the concentration of PU is about 10% and the solvent is selected from the group consisting of THF and DMF.

Another even more preferred embodiment of the invention relates to the method as defined herein above, wherein the concentration of PU is about 10%, the solvent is selected from the group consisting of THF and DMF and the produced fibres have a diameter of between about 500nm to 1500nm.

Yet another preferred embodiment of the invention relates to the method as defined herein above, wherein the at least one polymer comprises PET,

A more preferred embodiment of the invention relates to the method as defined herein above, wherein the at least one polymer is PET.

Another more preferred embodiment of the invention relates to the method as defined herein above, wherein the concentration of PET is between 5 and 25%.

An even more preferred embodiment of the invention relates to the method as defined herein above, wherein the concentration of PET is about 10%.

The most preferred embodiment of the invention relates to the method as defined herein above, wherein the concentration of PET is about 10% and the solvent is TFA.

An even more preferred embodiment of the invention relates to the method as defined herein above, wherein the concentration of PET is about 10%, the solvent is TFA and the produced fibres have a diameter of between about 200nm to 500nm.

The skilled person is aware that electrospinning-elements can have varying tips, i.e. variations in the diameter of the cross-section, different materials etc. The skilled person is aware of the different capillary tips that can be used for the above methods, that can be part of the above apparatuses, and that can be employed to produce the porous hollow objects as defined above.

Another preferred embodiment of the invention relates to the method as defined herein above, wherein the electrospinning-element comprises a capillary tip suitable for the extrusion of the polymer melt or polymer solution.

As is known to the skilled person, the working distance between the capillary tip and the counter-electrode during electrospinning should be adjusted according to the actual experimental parameters. Explicitly envisioned are any working distances between the capillary tip and the counter-electrode that allow for the production of the porous hollow objects as defined herein,

Thus, another preferred embodiment of the invention relates to the method as defined herein above, wherein the working distance between the capillary tip and the counter-electrode is between 5 and 15 cm, preferably between 5 and 10 cm.

Also the flow-rate of the polymer-solution and/or polymer-melt has to be adjusted to the desired experimental setup. In a preferred embodiment the How-rate of the polymer-solution and/or the polymer melt is between 0,1 and 20ml/h.

Another preferred embodiment of the invention relates to the method as defined herein above, wherein the flow-rate of the polymer-solution and/or the polymer melt is between 0,5 and 10ml/h, preferably between 1 and 8ml/h, and most preferably between 2 and 3 ml/h.

As set out above, and depicted in Figure 1, by electrospinning of a polymer-melt, or
- solution on to a rotating collector element the porous hollow objects of the invention are produced. The collector-element can be of any material, substance, and/or composition that will allow coiling, reeling up etc. of a jet of polymer-melt or
- solution as defined herein.

Thus, another preferred embodiment of the invention relates to the method as defined herein above, wherein the collector-element is made of metal.

Another preferred embodiment of the invention relates to the method as defined herein above, wherein the collector-element is made of steel.

Another preferred embodiment relates to the method as defined herein above, wherein the collector-element is made of aluminium.

As set out above and depicted in Figure 1, by electrospinning of a polymer-melt, or - solution on to a rotating collector element the porous hollow objects of the invention are produced. Because the electrospun fibres are directly collected on the collector-element, the collector-element acts as a kind of template for the shape, dimension and cross-section characteristics of the porous, hollow objects as defined herein above. Explicitly envisioned as being part of the present invention are any kind of geometrical shapes, figures, i.e. a tube, a sphere, a cube, a polygon or any other shape that comprises, surrounds or contains space. It is thus a unique feature of the present invention that by choosing and/or designing the collector-element, literally any size or shape of porous hollow objects as defined herein above can be realized.

Importantly, depending on the use of the porous, hollow objects as defined herein above, different shapes and sizes of such objects are needed. Thus, for example, by using a collector-element with a cylindrical-cross section, a porous hollow object with cylindrical-cross section will be produced.

Another preferred embodiment of the invention relates to the method as defined herein above, wherein the collector-element comprises a cylindrical cross-section.

Another preferred embodiment of the invention relates to the method as defined herein above, wherein the collector-element comprises any trilateral, quadrilateral, pentalateral, hexalateral, heptalateral, octalateral or any other polylateral cross-section,

As laid out above, in contrast to conventional methods of electrospinning, in the method of the present invention a collector-element is placed between the tip of the electrospinning element and the counterelectrode. This collector-element can be rotated by its length-axis.

Thus, another preferred embodiment of the invention relates to the method as defined herein above, wherein the collector-element is rotated by its length-axis during the electrospinning process.

The skilled person is aware that any means to rotate the collector-element of the invention can be employed, as long as the collector-element is rotated by its length-axis during the electrospinning process.

A preferred embodiment of the invention relates to the method as defined herein above, wherein the collector-element is rotated by its length-axis during the electrospinning process by a motor.

Preferably the motor is an electro-motor.

Preferably the motor runs at least with 50rpm, 100rpm, 150rpm, 200rpm, 250rpm, 300rpm, 350,rpm, 400rpm, 450rpm, 500 rpm, 600 rpm, 700rpm, 800rpm, 900 rpm or 100rpm.

More preferably the motor runs with about 800rpm.

Importantly, by varying the dimension, shape and rotating speed of the collector element, basically any type of fibre mats can be produced any shape or size of the porous hollow objects as defined herein above can be realized.

A preferred embodiment of the invention relates to the use of the porous hollow objects as defined herein above as an anti-migration casing for a transponder, as described above. As such transponders are mostly of a cylindrical shape a tubular casing is preferred. Alternatively, a sphere, a cube, a polygon or any other shape that comprises, surrounds or contains space is contemplated. To produce a tubular anti-migration casing using the above methods and apparatuses, a collector-element with a bar- or stick-like shape can be used.

Thus, another preferred embodiment of the invention relates to the method as defined herein above, wherein the collector-element is rod-shaped.

Another preferred embodiment of the invention relates to the method as defined herein above, wherein the collector-element is pole-shaped.

As laid out above an electrostatic potential is applied during the electrospinning process. Electrospinning of polymers typically involves generating a high voltage, DC, electrostatic potential between the polymer fluid and a substrate where the polymer fluid and substrate have opposite charges. In a preferred embodiment of the above method a DC field is applied. Alternatively, an AC electrostatic potential is applied. Any strength of the electrostatic potential that is suitable for the electrospinning process is contemplated.

Thus, another preferred embodiment of the invention relates to the method as defined herein above, wherein said electrospinning comprises electrospinning said substance in the electrostatic potential having a strength of 2,000-400,000V/m.

Another preferred embodiment of the invention relates to the method as defined herein above, wherein said electrostatic potential has a strength of 4,000-20,000V/m.

As mentioned above, the porous hollow object of the invention as defined herein consists at least of polymeric fibres.

Thus, another preferred embodiment of the invention relates to the method as defined herein above, wherein said electrospinning comprises electrospinning fibers.

Parts of the invention are porous hollow objects consisting of fibres having any kind of dimension. One possibility to classify polymeric fibres is their diameter.

The skilled person is aware that, for example nano-, meso- and microfibers can be differentiated according to their diameter.

Thus, another preferred embodiment of the invention relates to the method as defined herein above, wherein said electrospinning comprises electrospinning nanofibers.

In a preferred embodiment the nanofibres have a diameter of at least 50nm, at least 100nm, at least 150nm, at least 200nm, at least 250nm, at least 300nm, at least 350nm, at least 400nm, at least 450nm, at least 500nm, at least 550nm, at least 600nm, at least 650nm, at least 700nm, at least 750nm, at least 800nm, at least 850nm, at least 900nm, at least 950nm, at least 980nm, at least 990nm or at least 999nm.

Another preferred embodiment of the invention relates to the method as defined herein above, wherein said electrospinning comprises electrospinning microfibers.

In another preferred embodiment the microfibers have a diameter of at least 1µm, at least 2µm, at least 3µm, at least 4µm, at least 5µm, at least 6µm, at least 7µm, at least 8µm, at least 9µm, at least 10µm, at least 11µm, at least 12µm, at least 13µm, at least 14µm, at least 15µm, at least 50µm, at least 75µm or at least 100µm.

Clearly, the skilled person can contemplate any possible combination of nano-, and/or meso-, and/or microfibers as defined herein above in detail, i.e. any of the aforementioned fibres or combinations thereof that form a" non-woven mat" structure as defined herein above.

An even more preferred embodiment of the invention relates to the porous hollow object as described herein consisting at least of fibres having a diameter of between about 200nm to 500 mn.

An even more preferred embodiment of the invention relates to the porous hollow object as described herein consisting at least of fibres having a diameter of between about 400nm to 800 nm.

An even more preferred embodiment of the invention relates to the porous hollow object as described herein consisting at least of fibres having a diameter of between about 500nm to 1500 nm.

Another preferred embodiment of the invention relates to the porous hollow objects as defined herein produced by the method as defined herein above and/or employing an apparatus as defined herein above and having the above mentioned polymeric composition(s), measure(s) and feature(s).

As mentioned above the porous hollow object as defined herein above can preferably be used as a casing, especially for any device, sensor, implement, tool, gadget and the like that purposefully can be implanted into the body of an animal, e.g. a RFID-transponder, Thus, advantageously in order to benefit from the superior properties and features of the porous hollow object as defined herein above when used as a casing or anti-migration casing, the transponder has to be inserted into the hollow space inside the porous hollow object, so that the casing or anti-migration casing seals off the transponder.

Thus, another aspect of the present invention relates to an implantable miniature transponder comprising at least a transponder unit and the porous hollow object or casing or anti-migration casing as defined herein above, optionally produced using the apparatus as defined herein and/or by the method as defined herein, wherein the transponder unit is located inside the casing and the casing seals off the transponder. The porous hollow object as defined herein above, optionally produced using the above mentioned apparatus and/or by the abovementioned methods can have, e.g. a tubular shape and open ends. Thus, when attempting to assemble an implantable miniature transponder comprising at least a transponder and the porous hollow object or casing or anti-migration casing as defined herein above, following insertion of a transponder or the like, the ends of the porous hollow object have to be sealed, closed, shut or occluded in any other way.

Thus, another aspect of the present invention relates to a method of assembling an implantable miniature transponder, the method comprising
a) producing the porous hollow object or casing or anti-migration-casing as defined herein above optionally produced using the apparatus as defined herein above and/or by the method as defined herein above
b) inserting of a transponder unit into the casing, and
c) scaling the casing.

One possibility for sealing the porous hollow object or casing or anti-migration casing as defined herein above is by simply pressing the ends of the porous hollow object together.

Thus, another preferred embodiment of the invention relates to the above method, wherein the scaling step is performed by physical pressure.

The skilled person is also aware of the possibility to cross-link any given polymeric structure, surface, object etc. by using appropriate cross-linking agents. Such agents are known to the skilled person.

Thus, another preferred embodiment of the invention relates to the above method, wherein the sealing step is performed by a chemical reaction.

Alternatively, sealing the porous hollow object or casing or anti-migration casing as defined herein above by cross-linking using UV-light or laser is also explicitly contemplated.

Thus, another preferred embodiment of the invention relates to the above method, wherein the sealing step is performed by UV-light.

Thus, another preferred embodiment of the invention relates to the above method, wherein the sealing step is performed by a laser.

The transponder encased in the porous hollow object or casing or anti-migration casing as defined herein above can be used to identify animals. Typically, the transponder is transplanted into the animal and the above mentioned FID-detection methodology can be used to track and/or identify the animal.

Another aspect of the present invention thus relates to the use of an implantable miniature transponder as defined herein above as an identification tag for animals.

### Example 1

### A new electrospinning method to produce hollow objects consisting of non-woven mats

In standard electrospinning protocols a liquefied polymer protrudes from the tip of an electrospinning element and is spun into a fibre by virtue of an electrostatic potential and is subsequently collected on the respective counter electrode. Here, a novel electrospinning method is presented here that allows for the production of porous hollow objects of any kind, size or dimension. It is demonstrated here, that using an apparatus as depicted in Figure 1 porous, hollow objects that can be used for a plethora of applications, e.g. as biocompatible casings for RFID-transponders, can be produced. By using a rotating collector-element that is placed between the electrospinning element and the counter-electrode and by varying parameters as flow-rate (of the polymer), the strength of the electrostatic potential, the polymer used, the distance of the collector-element from the counter-electrode, a multitude of porous, hollow objects with variable functions can be readily produced.

### Example 2

### Preparation of anti-migration casings using modified electrospinning methods

Using the above-mentioned new electrospining method a variety of porous, hollow objects were produced using the parameters listed in Table 1.

**Table 1**

| | Solvent | Polymer concentration (% weight) | Tip | WD (5~15cm) | FR (1~5mL/h) | Opt V (3~15kV) |
|---|---|---|---|---|---|---|
| PET | TFA | 10% | 1mm | 8cm | 2 mL/h | 10hV |
| PCL | CH.TFA, HFIP | 10% | 0.8mm | 7cm | 3 mL/h | 9kV |
| PLA | CH TFA | CH12% TFA 15% | 1mm | 5cm CH, 6 cm TFA | 2 mL/h | 8kVCH 8.5kVTFA |
| PU | THF/DMF 50/50 | 10% | 9.8mm | 9cm | 3 mL/h | 9kV |

| | | | | | | |
|---|---|---|---|---|---|---|
| WD: Working Distance (between tip and counter-electrode) FR; Flow Rate Opt. V.: Optimum Voltage TFA: Trifluoroacetric acid, CP3COOH CH: Chloroform: CHCl₃. HFIP: 1,1,1,3,3,3-Hexafluoroisopropand, (CF₃)₂CHOH DMF, N,N-Dimethylformamid, HCON(CH₃)₂ | | | | | | |

### Example 3

### Implanting transponders with or without a novel anti-migration casing

The above mentioned casings produced by the method of the invention, were employed as casings for transponders, i.e. transponders were inserted into the casings and the casings were closed. In order to test for the novel and improved properties of these casings they were injected into mice using state-of-the-art commercially available injectors.

Mice implanted with encased transponders or just with transponders (as controls) were kept under standard animal facility conditions for periods of two and four weeks and were then sacrificed. In order to assess the outcome of transplanting transponders with or without the anti-migration casing of the invention into animals, tissue sections were prepared four weeks past implantation. The skin above the implantation site was shaved and a square piece of tissue of approx. 1 x 2,5 x 0,7 cm was prepared (see Figure 3). The tissue square was cut longitudinally at the basal site, and the transponder was removed with forceps, leaving a central cavity where the transponder was positioned before. Tissue samples were embedded in paraffin (Histo-Comp^{®}, Vogel Wilhelm GmbH, Gießen) and 3-5µm sections were prepared and mounted on cover slips. Following a hematoxylin-eosine (HE) staining, sections were inspected under the light-microscope for occurrence of inflammation and swelling. Implantation of an uncoated transponder leads to adverse reactions of the pericapsular tissue, i.e. inflammation and swelling (Figure 4). In stark contrast the transplantation of a transponder within a porous, biocompatible anti-migration casing of the invention (here consisting of the polymer PET) does not provoke any aberrant tissue reactions (Figure 5A). Rather, it appears that surrounding connective tissue started to grow into the capsular space, that is, surrounding tissue started to grow into the porous biocompatible anti-migration casing of the invention (Figure 5B),

## Claims

1. Porous hollow object, comprising at least one polymer.

2. The object according to claim 1 wherein the object consists at least of polymeric nanofibres.

3. The object according to claims 1 or 2, wherein the object has a three-dimensional structure of a non-woven mat.

4. The object according to any of claims 1 to 3, wherein the object has a porosity of between 30 to 90%, 50 to 90%, or 60 to 80%.

5. The object according to any of claims 1 to 4, wherein the object is non-biodegradable for at least 6 months.

6. The object according to any of claims 1 to 5, wherein the object is biocompatible.

7. The object according to any of claims 1 to 6, wherein the object is an anti-migration casing.

8. The object according to any of claims 1 to 7, wherein the object comprises at least the polymer PET.

9. Apparatus for the production of a porous object according to any one of claims 1 to 8, and wherein said apparatus comprises at least:
a) an enclosure/ syringe suitable for storage of a substance and suitable for provision of said substance to the tip of an electrospinning element,
b) an electrospinning-element,
c) a high voltage power supply,
d) a collector-element, and
e) a counter electrode.

10. Apparatus according to claim 9, wherein the collector-element is positioned such that there is a distance of at least 0,1cm, at least 0,2cm, at least 0,3cm, at least 0,4cm, at least 0,5cm, at least 0,6cm, least 0,7cm, at least 0,8cm, at least 0,9cm, at least 1,0cm, at least 1,5cm, at least 2cm between the collector-element and the counter-electrode.

11. Apparatus according to claims 9 or 10, wherein the collector-element is rotated by its length-axis during the electrospinning process.

12. Method for producing a porous object according to any of claims 1 to 8 and/or employing an apparatus according to any one of claims claims 9 to 11, the method comprising
a) providing a substance in an enclosure/ syringe suitable for storage of a substance and suitable for provision of said substance to the tip of an electrospinning element,
b) applying an electrostatic potential,
c) electrospinning of said substance from a tip of an electrospinning element onto a collector-element,
d) drying the object, and
e) collecting the object from the collector-element.

13. An implantable miniature transponder comprising at least a transponder unit and the porous hollow object or casing of any one of claims 1 to 8 optionally produced using the apparatus according to any one of claims 9 to 11 and/or by the method according to claim 12, wherein the transponder unit is located inside the casing and the casing seals off the transponder.

14. Method of assembling an implantable miniature transponder, the method comprising the steps of:
a) producing the porous hollow object or casing of any one of claims 1 to 8 optionally produced using the apparatus according to any one of claims 9 to 11 and/or by the method according claim 12,
b) inserting of a transponder unit into the casing, and
c) sealing the casing.

15. Use of an implantable miniature transponder according to claim 13 or assembled according to claim 14 as an identification tag for animals.
